# EUROPEAN PATENT APPLICATION

(11) **EP 3 926 585 A1**
(43) Date of publication of application: **22.12.2021**
(21) Application number: 20755209.2
(22) Date of filing: 30.01.2020
(51) Int. Cl.: G06T 7/60, G06T 7/70, G06F 3/01, G06F 3/0346, G06F 3/042, G06F 3/0484

(54) **INFORMATION PROCESSING DEVICE, INFORMATION PROCESSING METHOD, AND RECORDING MEDIUM**

(30) Priority: 13.02.2019 JP 2019023225
(71) Applicant: Sony Group Corporation, Tokyo 108-0075 (JP)
(72) Inventor: TOMONAGA Seishi, Tokyo 108-0075 (JP); IKEDA Tetsuo, Tokyo 108-0075 (JP); FUJINAWA Eisuke, Tokyo 108-0075 (JP); GOTOH Kenji, Tokyo 108-0075 (JP); IRIE Atsushi, Tokyo 108-0075 (JP); OTSUKA Junji, Tokyo 108-0075 (JP); SATO Yugo, Tokyo 108-0075 (JP)
(74) Representative: MFG Patentanwälte Meyer-Wildhagen Meggle-Freund Gerhard PartG mbB
(86) International application number: PCT/JP2020/003350
(87) International publication number: WO 2020/166351

(57) **Abstract**

The present disclosure relates to an information processing apparatus, an information processing method, and a recording medium that enable a more natural operation.

On the basis of shape information of an operating body part that performs an operation on an operation surface, the shape information being acquired from a captured image, a setting unit fixes an acting region on which the operation by the operating body part acts, and sets a parameter to be used for a determination as to the operation in the acting region. The present disclosure is applicable to, for example, a display system that allows a user to operate a projection image.

## Description

### TECHNICAL FIELD

The present disclosure relates to an information processing apparatus, an information processing method, and a recording medium, and particularly relates to an information processing apparatus, an information processing method, and a recording medium that enable a more natural operation.

### BACKGROUND ART

In recent years, display systems are becoming pervasive, which project images onto a plane other than a screen, such as a top surface of a table, a ceiling, or a wall and allow a user to operate displayed display information (a virtual object).

As such a display system, for example, Patent Document 1 discloses a system that controls, in a case where a real object such as a cup or a saucer is put on a top surface of a table, movement of a displayed virtual object in accordance with a positional relationship between the virtual object and the real object.

### CITATION LIST

### PATENT DOCUMENT

Patent Document 1: Japanese Patent Application Laid-Open No. 2016-51436

### SUMMARY OF THE INVENTION

### PROBLEMS TO BE SOLVED BY THE INVENTION

The operation on the above-described virtual object is achieved by recognizing, for example, a touch or a gesture with a user's hand, arm, or the like. However, the conventional art gives no consideration to, for example, fine settings on a position on which an operation acts in a hand and a criterion for the operation at the position, failing to achieve a natural operation.

The present disclosure has been made in view of such a circumstance, and is intended for achievement of a more natural operation.

### SOLUTIONS TO PROBLEMS

An information processing apparatus according to the present disclosure is an information processing apparatus including a control unit configured to, on the basis of shape information of an operating body part that performs an operation on an operation surface, the shape information being acquired from a captured image, fix an acting region on which the operation by the operating body part acts and set a parameter to be used for a determination as to the operation in the acting region.

An information processing method according to the present disclosure is an information processing method including causing an information processing apparatus to, on the basis of shape information of an operating body part that performs an operation on an operation surface, the shape information being acquired from a captured image, fix an acting region on which the operation by the operating body part acts and set a parameter to be used for a determination as to the operation in the acting region.

A recording medium according to the present disclosure is a recording medium recording therein a program that causes a computer to execute processing of, on the basis of shape information of an operating body part that performs an operation on an operation surface, the shape information being acquired from a captured image, fixing an acting region on which the operation by the operating body part acts and setting a parameter to be used for a determination as to the operation in the acting region.

In the present disclosure, on the basis of shape information of an operating body part that performs an operation on an operation surface, the shape information being acquired from a captured image, an acting region on which the operation by the operating body part acts is fixed, and a parameter to be used for a determination as to the operation in the acting region is set.

### EFFECTS OF THE INVENTION

According to the present disclosure, it is possible to achieve a more natural operation.

Note that the effect described herein is not necessarily limitative, and there may be achieved any one of the effects described in the present disclosure.

### BRIEF DESCRIPTION OF DRAWINGS

Fig. 1 is a diagram that illustrates an appearance of an information processing apparatus according to an embodiment of the present disclosure.
Fig. 2 is a diagram that illustrates an example of an operation on an operation surface.
Fig. 3 is a block diagram that illustrates a configuration example of the information processing apparatus.
Fig. 4 is a block diagram that illustrates a functional configuration example of a control unit.
Fig. 5 is a flowchart that depicts a flow of operation control processing.
Fig. 6 is a flowchart that depicts a flow of touch operation control processing.
Fig. 7 is a diagram that illustrates examples of a touch point and a touch valid range derived from a hand shape.
Fig. 8 is a diagram that illustrates examples of a touch point and a touch valid range derived from a hand shape and a hand posture.
Fig. 9 is a flowchart that depicts a flow of touch operation control processing.
Fig. 10 is a diagram that illustrates an example of a touch threshold value derived from a hand shape.
Fig. 11 is a flowchart that depicts a flow of dragging operation control processing.
Fig. 12 is a diagram that illustrates examples of a dragging point and a dragging threshold value derived from a hand shape.
Fig. 13 is a diagram that illustrates an example of a display according to a dragging operation for each hand shape.
Fig. 14 is a flowchart that depicts a flow of turn operation control processing.
Fig. 15 is a diagram that illustrates an example of a turn angle acquisition point derived from a hand shape.
Fig. 16 is a flowchart that depicts a flow of turn operation control processing.
Fig. 17 is a diagram that illustrates examples of a turn angle acquisition point and a turn angle multiple derived from a hand shape.
Fig. 18 is a diagram that depicts a turn angle multiple and a turnable region for each hand shape.
Fig. 19 is a flowchart that depicts an overall flow of operation control processing.
Fig. 20 is a diagram that depicts a modification of a touch operation.
Fig. 21 is a diagram that depicts a modification of a touch operation.
Fig. 22 is a block diagram that illustrates a configuration example of a computer.

### MODE FOR CARRYING OUT THE INVENTION

Hereinafter, a description will be given of a mode for carrying out the present disclosure (hereinafter, referred to as an embodiment). Note that the description is given in the following order.
1. Configuration and operation of information processing apparatus according to embodiment of the present disclosure
2. Example of touch operation
3. Example of dragging operation
4. Example of turn operation
5. Others

### <1. Configuration and operation of information processing apparatus according to embodiment of the present disclosure>

First, a description will be given of a configuration and an operation of an information processing apparatus according to an embodiment of the present disclosure.

### (Appearance of information processing apparatus)

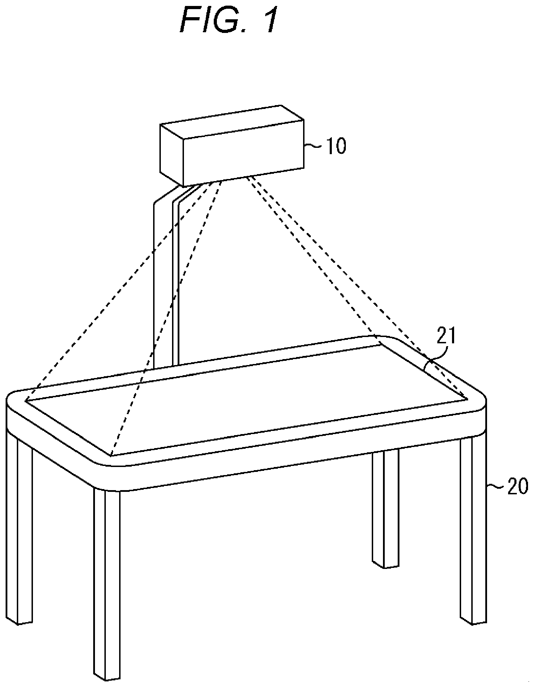

Fig. 1 is a diagram that illustrates an appearance of an information processing apparatus according to an embodiment of the present disclosure.

As illustrated in Fig. 1, an information processing apparatus 10 is supported by, for example, an arm member extending from a part of a table 20, at a position above the table 20 so as to be separated from a top surface 21 of the table 20.

The information processing apparatus 10 projects an image onto the top surface 21 of the table 20, the top surface 21 serving as an operation surface, and causes a user to operate a projection image (hereinafter, also referred to as a display object) displayed on the top surface 21.

Specifically, the information processing apparatus 10 includes a small projector and a camera, and has an image recognition function. The information processing apparatus 10 projects a display object onto the top surface 21, recognizes a touch and a gesture from a motion and an inclination angle of a user's hand that operates the display object, and reflects the recognized touch and gesture on the display object.

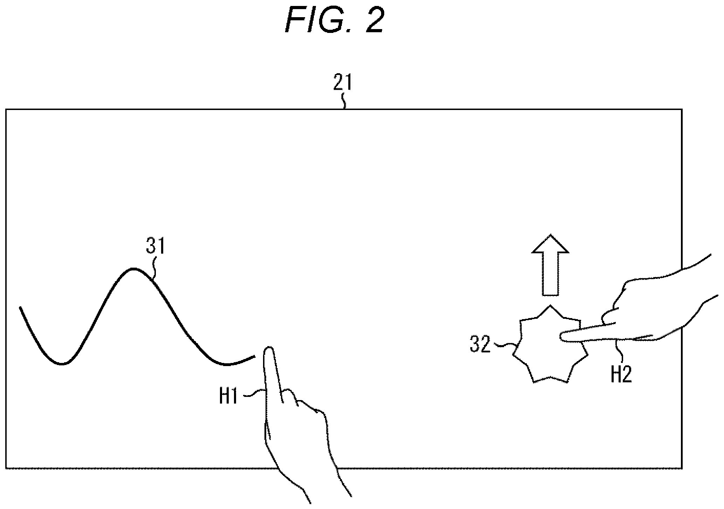

As illustrated in Fig. 2, for example, when a gesture with a user's hand H1 on the top surface 21 serving as the operation surface is recognized, a curve 31 is drawn on the top surface 21 in response to a trajectory of a finger. Furthermore, when a touch and a gesture with a user's hand H2 on the top surface 21 are recognized, an object 32 displayed on the top surface 21 moves on the top surface 21 in accordance with movement of a finger.

Such an operation on a display object is achieved by recognizing, for example, a touch and a gesture with a user's hand, arm, or the like. However, the conventional art gives no consideration to, for example, fine settings on a position on which an operation acts (is reflected) in a hand and a criterion for the operation at the position, failing to achieve a natural operation.

Hence, the information processing apparatus 10 according to the embodiment of the present disclosure is capable of setting, on the basis of a shape and a posture of an operating body part such as a hand or an arm, a position (e.g., a fingertip, an entire hand) on which an operation acts in the operating body part and a criterion (e.g., a valid range, a threshold value) of the operation at the position.

### (Configuration of information processing apparatus)

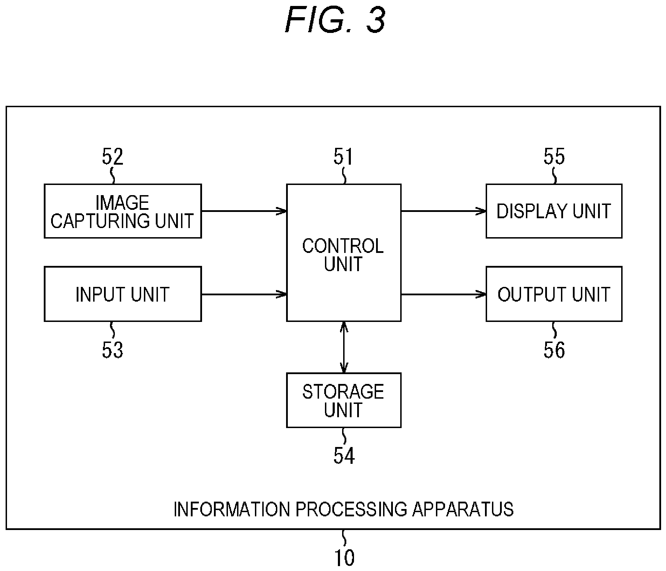

Fig. 3 is a block diagram that illustrates a configuration example of the information processing apparatus 10.

As illustrated in Fig. 3, the information processing apparatus 10 includes a control unit 51, an image capturing unit 52, an input unit 53, a storage unit 54, a display unit 55, and an output unit 56.

The control unit 51 includes a central processing unit (CPU) and the like, and controls each of the units of the information processing apparatus 10. A specific description on a configuration of the control unit 51 will be given later.

The image capturing unit 52 includes a monocular camera, a stereo camera, a distance sensor, or the like. The image capturing unit 52 captures an image of an operating body part such as a user's hand or arm on the operation surface (the top surface 21), under the control by the control unit 51. The captured image thus acquired is supplied to the control unit 51. In a case where the image capturing unit 52 serves as, for example, a stereo camera, a depth sensor, or the like, the image capturing unit 52 acquires as the captured image a distance image having distance information to the image capturing unit 52 for each pixel, under the control by the control unit 51, and supplies the distance image to the control unit 51.

The input unit 53 includes, for example, a microphone, a physical button, a switch, and the like. The input unit 53 supplies, as input information, audio information including user's voice, ambient sounds, and the like collected by the microphone and electrical signals generated by operating the button, the switch, and the like, to the control unit 51.

The storage unit 54 includes a read only memory (ROM), a random access memory (RAM), and the like. For example, the storage unit 54 stores information and parameters (hereinafter, also referred to as determination information) for determining a type and the like of an operation by an operating body part such as a hand or an arm.

The display unit 55 includes, for example, a projector that projects a display object (a projection image) onto the top surface 21 under the control by the control unit 51. The display unit 55 may include a display to be disposed on the top surface 21 or the like, in place of the projector. In this case, the display unit 55 displays an image corresponding to a projection image.

The output unit 56 includes, for example, a speaker and the like. The output unit 56 outputs voice, sound effects, and the like under the control by the control unit 51.

### (Configuration of control unit)

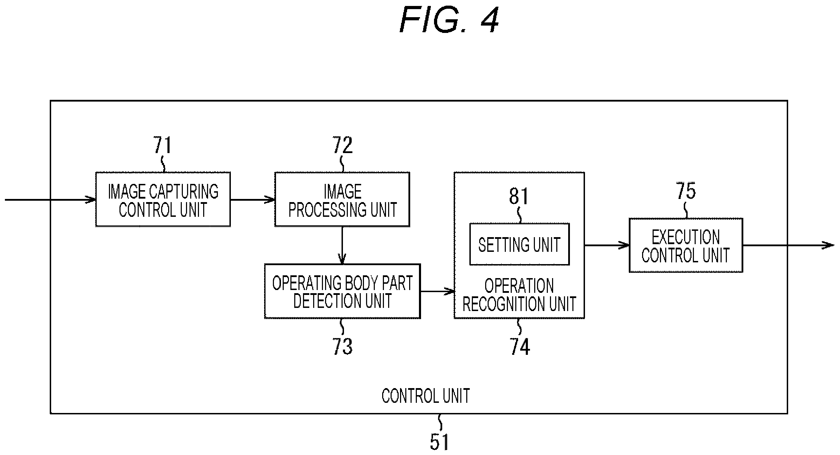

Fig. 4 is a block diagram that illustrates a functional configuration example of the control unit 51.

The control unit 51 includes an image capturing control unit 71, an image processing unit 72, an operating body part detection unit 73, an operation recognition unit 74, and an execution control unit 75.

The image capturing control unit 71 controls the image capturing unit 52 to acquire a captured image, and supplies the captured image to the image processing unit 72.

The image processing unit 72 subjects the captured image from the image capturing control unit 71 to image processing, and supplies a result of the image processing to the operating body part detection unit 73. For example, the image processing unit 72 erases the background from the captured image, and generates distance information indicating a distance to the operating body part, from a distance image.

The operating body part detection unit 73 detects the operating body part (a site of a user's body (e.g., a user's hand, arm, etc.)) from the captured image subjected to the image processing by the image processing unit 72.

Specifically, the operating body part detection unit 73 detects the skeleton of the operating body part from the captured image subjected to the image processing. The operating body part detection unit 73 thus acquires feature points (skeleton information, joint information) of the operating body part. The operating body part may be detected by pattern matching, deep learning, and the like, in addition to the marker method.

The operating body part detection unit 73 generates shape information indicating a shape of the operating body part relative to the operation surface (the top surface 21) and posture information indicating a posture of the operating body part that performs an operation on the operation surface, on the basis of the extracted feature points of the operating body part. The operating body part detection unit 73 then supplies the shape information and the posture information to the operation recognition unit 74.

The operation recognition unit 74 recognizes a type of an operation by the operating body part, with the determination information stored in the storage unit 54, on the basis of the detection results (the shape information, the posture information) of the operating body part from the operating body part detection unit 73.

The operation recognition unit 74 includes a setting unit 81.

The setting unit 81 sets (fixes) a position (such as the fingertip or the entire hand) where the operation by the operating body part acts on the operation surface (the top surface 21), with regard to the operation of the type recognized by the operation recognition unit 74, on the basis of the shape information and posture information acquired from the captured image. In the following, a position on which an operation acts in an operating body part will be referred to as an acting region. In a captured image, the acting region involves a point and a line segment between two points, in addition to a region having an area.

Furthermore, the setting unit 81 sets parameters (e.g., a valid range and threshold values as criteria for determining whether or not an operation is valid) to be used for a determination as to an operation in the set acting region, on the basis of the shape information and the posture information.

The acting region and parameters set by the setting unit 81 are stored as the determination information in the storage unit 54. The determination information is read from the storage unit 54 in accordance with the shape information and the posture information.

The operation recognition unit 74 determines whether or not the operation by the operating body part (in the acting region) is valid, on the basis of the parameters set by the setting unit 81. In a case where the operation recognition unit 74 determines that the operation is valid, the operation recognition unit 74 supplies operation information indicating the operation to the execution control unit 75.

The execution control unit 75 controls execution of processing by the output unit 56 according to the operation information from the operation recognition unit 74 (the operation in the acting region), on the basis of the parameters set by the setting unit 81. For example, the execution control unit 75 controls a display by the display unit 55 according to the operation in the acting region, on the basis of the parameters.

Note that the respective blocks in the control unit 51 may be individually configured. In addition, at least any of the blocks may be integrally configured. Alternatively, at least any of the blocks may be interconnected on a network, some of which may be configured as a cloud service on the Internet.

### (Flow of operation control processing)

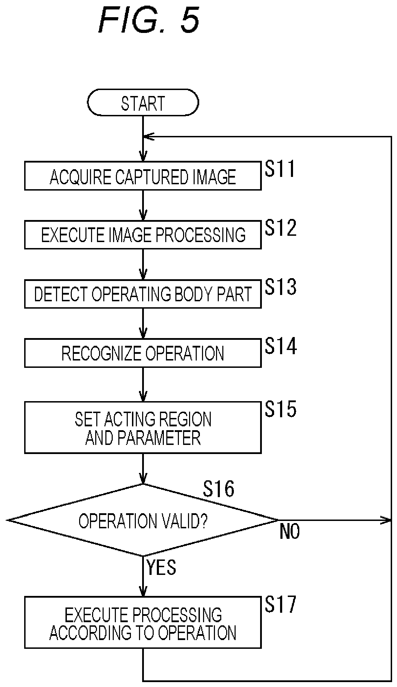

With reference to a flowchart of Fig. 5, next, a description will be given of a flow of operation control processing by the information processing apparatus 10.

In step S11, the image capturing control unit 71 controls the image capturing unit 52 to acquire a captured image of the operating body part relative to the operation surface.

In step S12, the image processing unit 72 subjects the captured image acquired by the image capturing control unit 71, to image processing.

In step S13, the operating body part detection unit 73 detects the operating body part from the captured image subjected to the image processing by the image processing unit 72. The operating body part detection unit 73 thus generates shape information and posture information of the operating body part.

In step S14, the operation recognition unit 74 recognizes a type of an operation by the operating body part, on the basis of the shape information and the posture information (at least the shape information) from the operating body part detection unit 73. The type of the operation to be recognized herein may be an operation of a specific type, in addition to a touch operation, a dragging operation, and a turn operation to be performed by the operating body part on the operation surface.

In step S15, the setting unit 81 sets an acting region of and parameters for the operating body part on the basis of the shape information and the posture information from the operating body part detection unit 73.

In step S16, the operation recognition unit 74 determines whether or not the operation in the acting region is valid, on the basis of the parameters.

In a case where it is determined in step S16 that the operation is valid, the flow proceeds to step S17 in which the execution control unit 75 executes processing according to the operation in the acting region on the basis of the parameters.

On the other hand, in a case where it is determined in step S16 that the operation is not valid, the execution control unit 75 executes no processing. The flow returns to step S11, and the processing tasks in and after step S11 are repeated.

According to the foregoing processing, the acting region for acting the operation by the operating body part and the parameters used for determining the operation in the acting region are finely set on the basis of the shape of operating body part. It is therefore possible to achieve a more natural operation.

In the following, a description will be given of examples of recognizing a touch operation, a dragging operation, and a turn operation as operations by a user's hand.

### <2. Example of touch operation>

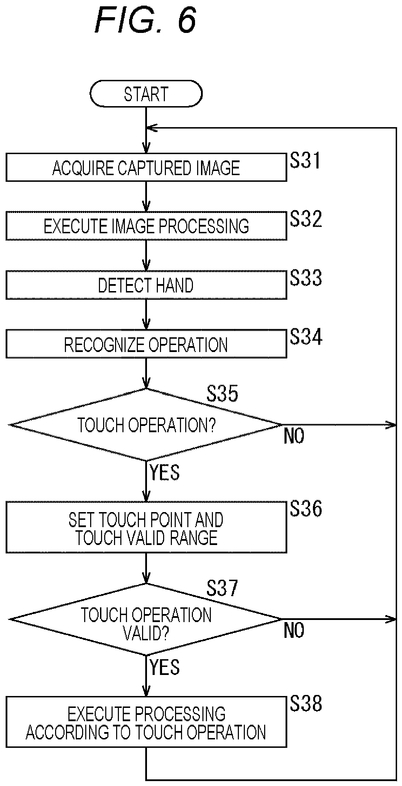

Fig. 6 is a flowchart that depicts a flow of touch operation control processing. The processing illustrated in Fig. 6 is executed in a state in which the image capturing unit 52 captures an image of a user's hand that operates a display object displayed on the top surface 21, for example.

In step S31, the image capturing control unit 71 controls the image capturing unit 52 to acquire a captured image of the user's hand relative to the top surface 21.

In step S32, the image processing unit 72 subjects the captured image acquired by the image capturing control unit 71, to image processing.

In step S33, the operating body part detection unit 73 detects the user's hand from the captured image subjected to the image processing by the image processing unit 72. The operating body part detection unit 73 thus generates shape information of the hand.

In step S34, the operation recognition unit 74 recognizes a type of an operation by the hand, on the basis of the shape information from the operating body part detection unit 73.

In step S35, the operation recognition unit 74 determines whether or not the recognized type of the operation is a touch operation. That is, it is determined whether or not a hand shape indicated by the shape information is a hand shape in the touch operation.

In a case where it is determined in step S35 that the type of the operation is not the touch operation, the flow returns to step S31, and the processing tasks in and after step S31 are repeated.

On the other hand, in a case where it is determined in step S35 that the type of the operation is the touch operation, that is, in a case where the hand shape indicated by the shape information is the hand shape in the touch operation, the flow proceeds to step S36.

In step S36, the setting unit 81 sets a touch point and a touch valid range (an area range on the top surface 21 with respect to the touch point) as an acting region of and parameters for the hand in the touch operation, on the basis of the shape information from the operating body part detection unit 73.

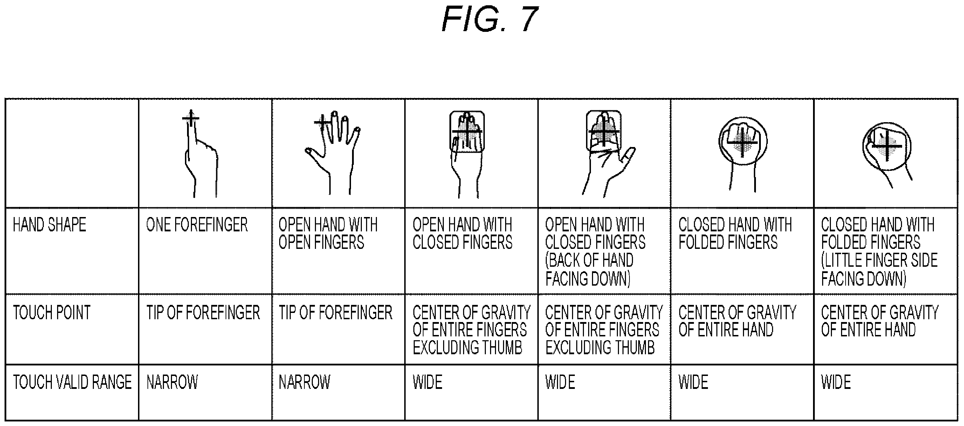

Here, with reference to Fig. 7, a description will be given of a touch point and a touch valid range associated with a hand shape indicated by shape information. As illustrated in Fig. 7, a touch point and a touch valid range are set in accordance with a hand shape indicated by shape information.

Specifically, in a case where the hand shape is "one forefinger" referring to a state in which only the forefinger is extended, the touch point denoted with a cross mark in the figure is set at the tip of the forefinger, and the touch valid range is set at a (relatively) "narrow" range.

In a case where the hand shape is "open hand with open fingers", the touch point is set at the tip of the forefinger, and the touch valid range is set at a "narrow" range.

In a case where the hand shape is "open hand with closed fingers", the touch point is set at the center of gravity of the entire fingers excluding the thumb (the vicinity of the second joint of the middle finger), and the touch valid range is set at a (relatively) "wide" range.

In a case where the hand shape is "open hand with closed fingers" in a state in which the back of the hand faces down, the touch point is set at the center of gravity of the entire fingers excluding the thumb (the vicinity of the second joint of the middle finger), and the touch valid range is set at a "wide" range.

In a case where the hand shape is "closed hand with folded fingers", the touch point is set at the center of gravity of the entire hand (the closed hand) (the vicinity of the first joint of the middle finger in the state in which the fingers are folded), and the touch valid range is set at a "wide" range.

In a case where the hand shape is "closed hand with folded fingers" in a state in which the little finger side faces down, the touch point is set at the center of gravity of the entire hand (the closed hand) (the vicinity of the base of the little finger in the state in which the fingers are folded), and the touch valid range is set at a "wide" range.

As described above, the touch point and the touch valid range are set in accordance with the hand shape. The user is therefore able to appropriately use different hand shapes in a case of performing a fine operation and in a case of performing a rough operation, by changing the hand shape, for example.

Referring back to the flowchart of Fig. 6, in step S37, the operation recognition unit 74 determines whether or not the operation at the touch point is valid, on the basis of the touch valid range. Specifically, it is determined whether or not the touch operation is valid, on the basis of whether or not a display object to be operated is present in the touch valid range and whether or not a distance between the touch point and the top surface 21 is shorter than a predetermined certain distance. The distance between the touch point and the top surface 21 can be calculated using a distance between the image capturing unit 52 and the top surface 21 and a distance between the image capturing unit 52 and the touch point (the user's hand). Both the distances are obtained from distance information which the image processing unit 72 generates on the basis of a distance image acquired by the image capturing unit 52 or a captured image acquired by the image capturing unit 52.

In a case where it is determined in step S37 that the touch operation is valid, that is, in a case where a display object to be operated is present in the touch valid range and the distance between the touch point and the top surface 21 is shorter than the certain distance, the flow proceeds to step S38 in which the execution control unit 75 executes processing according to the touch operation at the touch point, on the basis of the touch valid range. As described above, the touch operation becomes valid even in the case where the user's hand is not in direct contact with the top surface 21 in addition to the case where the user's hand is in direct contact with the top surface 21.

For example, the execution control unit 75 causes the display unit 55 to perform a feedback display according to the touch operation (e.g., a change in shape or color of the touched display object, etc.). Alternatively, the execution control unit 75 causes the output unit 56 to execute a command according to the touch operation (e.g., output of a sound effect, etc.).

On the other hand, in a case where it is determined in step S37 that the touch operation is not valid, that is, in a case where no display object to be operated is present in the touch valid range or the distance between the touch point and the top surface 21 is longer than the certain distance, the execution control unit 75 executes no processing. The flow returns to step S31, and the processing tasks in and after step S31 are repeated.

According to the foregoing processing, the touch point for acting the touch operation by the hand and the touch valid range used for determining the touch operation at the touch point are finely set on the basis of the hand shape. It is therefore possible to achieve a more natural and intuitive touch operation.

In the foregoing processing, the touch point and the touch valid range are set on the basis of the shape information indicating the hand shape. The touch point and the touch valid range may alternatively be set on the basis of the shape information and posture information indicating the hand posture relative to the top surface 21.

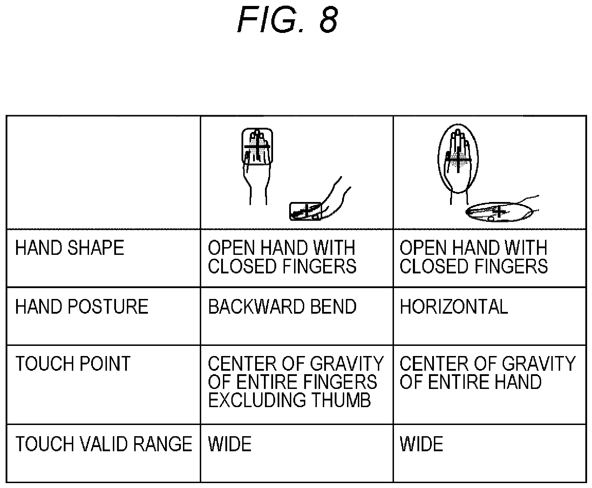

Fig. 8 is a diagram that depicts a touch point and a touch valid range associated with a hand shape indicated by shape information and a hand posture indicated by posture information. As illustrated in Fig. 8, a touch point and a touch valid range are set in accordance with a hand shape indicated by shape information and a hand posture indicated by posture information.

Specifically, in a case where the hand shape is "open hand with closed fingers" and the hand posture is "backward bend" referring to a state in which the fingers are bent backward relative to the back of the hand, the touch point is set at the center of gravity of the entire fingers excluding the thumb, and the touch valid range is set at a "wide" range.

On the other hand, in a case where the hand shape is "open hand with closed fingers" and the hand posture is "horizontal" referring to a state in which the fingers are extended relative to the back of the hand, the touch point is set at the center of gravity of the entire hand, and the touch valid range is set at a "wide" range.

As described above, the touch point and the touch valid range are set in accordance with the hand shape and the hand posture. It is therefore possible to achieve a more natural touch operation at less load even in a case where the user changes the hand posture.

Furthermore, according to the foregoing processing, in the case where the hand shape indicated by the shape information is the hand shape in the touch operation, the touch valid range is set as the parameter for the touch operation. Besides this, a touch threshold value that is a threshold value of the distance between the touch point and the top surface 21 may be set as a parameter for the touch operation, in addition to the touch valid range.

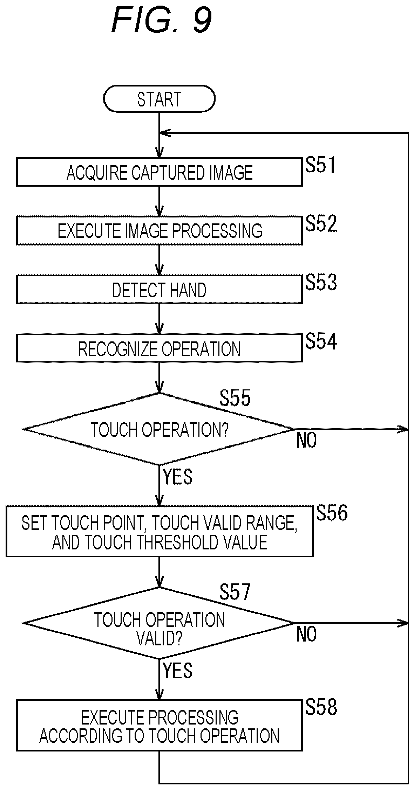

Fig. 9 is a flowchart that depicts a flow of touch operation control processing in which the touch valid range and the touch threshold value are set as the parameters for the touch operation.

Note that the processing tasks in steps S51 to S55 in the flowchart of Fig. 9 are similar to the processing tasks in steps S31 to S35 in the flowchart of Fig. 6; therefore, the description thereof will not be given here.

That is, in a case where it is determined in step S55 that the type of the operation is the touch operation, that is, in a case where the hand shape indicated by the shape information is the hand shape in the touch operation, the flow proceeds to step S56.

In step S56, the setting unit 81 sets a touch point, a touch valid range, and a touch threshold value as an acting region of and parameters for the hand in the touch operation, on the basis of the shape information from the operating body part detection unit 73.

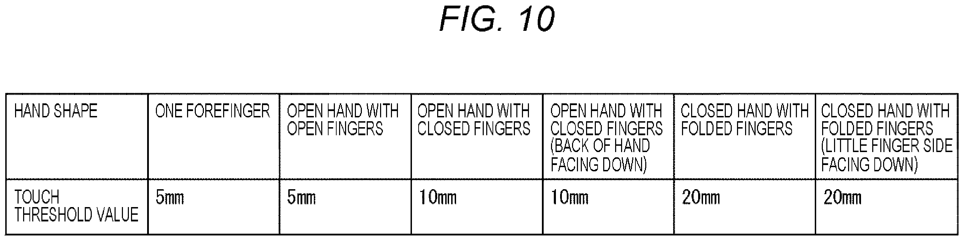

Here, with reference to Fig. 10, a description will be given of a touch threshold value associated with a hand shape indicated by shape information. As illustrated in Fig. 10, a touch threshold value is set in accordance with a hand shape indicated by shape information, in addition to a touch point and a touch valid range (not illustrated).

Specifically, in the case where the hand shape is "one forefinger" referring to the state in which only the forefinger is extended, the touch threshold value is set at 5 mm.

In the case where the hand shape is "open hand with open fingers", the touch threshold value is set at 5 mm.

In the case where the hand shape is "open hand with closed fingers", the touch threshold value is set at 10 mm.

In the case where the hand shape is "open hand with closed fingers" in the state in which the back of the hand faces down, the touch threshold value is set at 10 mm.

In the case where the hand shape is "closed hand with folded fingers", the touch threshold value is set at 20 mm.

In the case where the hand shape is "closed hand with folded fingers" in the state in which the little finger side faces down, the touch threshold value is set at 20 mm.

As described above, the touch threshold value is set in accordance with the hand shape, in addition to the touch point and the touch valid range. The user is therefore able to more appropriately use different hand shapes in a case of performing a fine operation and in a case of performing a rough operation, for example.

Referring back to the flowchart of Fig. 9, in step S57, the operation recognition unit 74 determines whether or not the operation at the touch point is valid, on the basis of the touch valid range and the touch threshold value. Specifically, it is determined whether or not the touch operation is valid, on the basis of whether or not a display object to be operated is present in the touch valid range and whether or not the distance between the touch point and the top surface 21 is less than the touch threshold value described above.

In a case where it is determined in step S57 that the touch operation is valid, that is, in a case where a display object to be operated is present in the touch valid range and the distance between the touch point and the top surface 21 is less than the touch threshold value, the flow proceeds to step S58 in which the execution control unit 75 executes processing according to the touch operation at the touch point, on the basis of the touch valid range and the touch threshold value.

On the other hand, in a case where it is determined in step S57 that the operation is not valid, that is, in a case where no display object to be operated is present in the touch valid range or the distance between the touch point and the top surface 21 is more than the touch threshold value, the execution control unit 75 executes no processing. The flow returns to step S51, and the processing tasks in and after step S51 are repeated.

According to the foregoing processing, the touch threshold value as the threshold value of the distance range between the touch point and the top surface 21 is finely set on the basis of the hand shape, in addition to the touch point and the touch valid range. It is therefore possible to achieve a more natural and finer touch operation.

In the foregoing processing, the hand size may be determined in addition to the hand shape. In a case where it is determined that the hand size is smaller than a certain size, there is a high possibility that the user is a child. In this case, the touch valid range and the touch threshold value are set to be larger than those in a case where the hand size is equal to or more than the certain size. With this configuration, it is possible to achieve a more reliable touch operation even in a case where a child performs a coarse operation.

Furthermore, identification information for identifying the user may be supplied to the control unit 51 as the input information from the input unit 53. In this case, the position of the touch point, the touch valid range, and the touch threshold value may be set for each user to be identified by identification information.

Moreover, dominant hand information indicating a dominant hand of the user may be registered in the storage unit 54 or the like in advance. In this case, the position of the touch point, the touch valid range, and the value of the touch threshold value may be set in such a manner that it is determined whether or not the user touches with his/her dominant hand, on the basis of the dominant hand information.

In the foregoing description, the determination as to whether or not the hand shape indicated by the shape information is the hand shape in the touch operation is made on the basis of the determination information stored in the storage unit 54 in advance.

In addition to this, for example, the user may be able to register the hand shape in the touch operation prior to the start of the touch operation control processing. In this case, it is determined whether or not the hand shape indicated by the shape information is the hand shape in the registered touch operation.

For example, the hand shape in the touch operation is registered for each application, such as a game, to be provided by a display object projected by the display unit 55, or is registered in such a manner that the hand shape is selected on a menu screen or the like prepared in advance.

Furthermore, the hand shape in the touch operation may be registered by audio input to the input unit 53, or the like, or may be registered in such a manner that a hand shape recognized when the user performs the touch operation in advance is stored.

Moreover, for example, in a case where the user's hand approaches the display object to be subjected to the touch operation or enters a predetermined range set with respect to the display object, the hand shape recognized at this time may be registered as the hand shape in the touch operation.

### <3. Example of dragging operation>

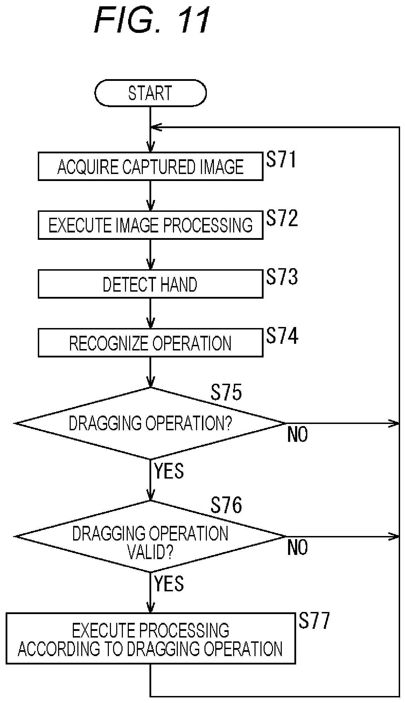

Fig. 11 is a flowchart that depicts a flow of dragging operation control processing. The processing illustrated in Fig. 11 is executed in the state in which the foregoing touch operation is performed.

Note that the processing tasks in steps S71 to S74 in the flowchart of Fig. 11 are similar to the processing tasks in steps S31 to S34 in the flowchart of Fig. 6; therefore, the description thereof will not be given here.

That is, in step S75, the operation recognition unit 74 determines whether or not the type of the recognized operation is a dragging operation. Specifically, it is determined whether or not the hand shape indicated by the shape information is a hand shape in the dragging operation which is the same as the hand shape in the touch operation.

In a case where it is determined in step S75 that the type of the operation is not the dragging operation, the flow returns to step S71, and the processing tasks in and after step S71 are repeated.

On the other hand, in a case where it is determined in step S75 that the type of the operation is the dragging operation, that is, in a case where the hand shape indicated by the shape information is the hand shape in the dragging operation, the flow proceeds to step S76.

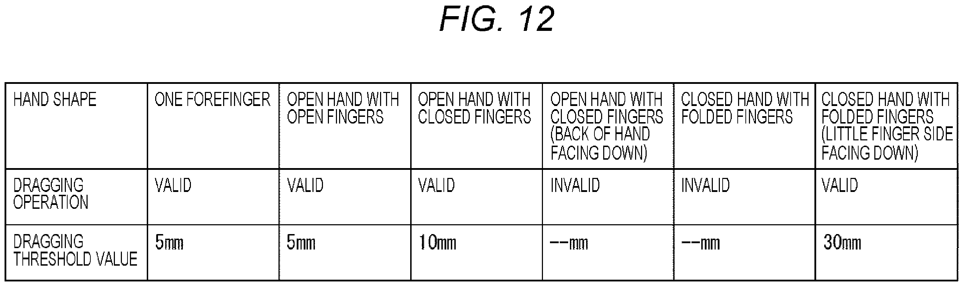

Here, with reference to Fig. 12, a description will be given of validity/invalidity of the dragging operation to be determined on the basis of the hand shape indicated by the shape information and a dragging threshold value representing a movement distance of the touch point when the dragging operation at the touch point starts to act. As illustrated in Fig. 12, the validity/invalidity of the dragging operation and the dragging threshold value are set in accordance with the hand shape indicated by the shape information.

Note that the validity/invalidity of the dragging operation and the dragging threshold value according to the shape information are set at the same time when the touch point and the touch valid range are set in the touch operation control processing, for example. Furthermore, in the dragging operation, the touch point set in the touch operation serves as an acting region.

In the case where the hand shape is "one forefinger" referring to the state in which only the forefinger is extended, the dragging operation is made "valid", and the dragging threshold value is set at 5 mm.

In the case where the hand shape is "open hand with open fingers", the dragging operation is made "valid", and the dragging threshold value is set at 5 mm.

In the case where the hand shape is "open hand with closed fingers", the dragging operation is made "valid", and the dragging threshold value is set at 10 mm.

In the case where the hand shape is "open hand with closed fingers" in the state in which the back of the hand faces down, the dragging operation is made "invalid", and the dragging threshold value is not set.

In the case where the hand shape is "closed hand with held hand", the dragging operation is made "invalid", and the dragging threshold value is not set.

In the case where the hand shape is "closed hand with held hand" in the state in which the little finger side faces down, the dragging operation is made "valid", and the dragging threshold value is set at 30 mm.

As described above, in accordance with the hand shape, whether or not to shift from the touch operation to the dragging operation is set, and the dragging threshold value representing the movement distance for the dragging operation to start to act is set.

Referring back to the flowchart of Fig. 11, in step S76, the operation recognition unit 74 determines whether or not the dragging operation at the touch point is valid. Specifically, it is determined whether or not the dragging operation is valid, on the basis of whether or not the movement distance of the touch point is more than the dragging threshold value.

In a case where it is determined in step S76 that the dragging operation is valid, that is, in a case where the movement distance of the touch point is more than the dragging threshold value, the flow proceeds to step S77 in which the execution control unit 75 executes processing according to the dragging operation at the touch point on the basis of the dragging threshold value.

Specifically, the execution control unit 75 moves, in accordance with the dragging operation, the display object displayed on the top surface 21 in a manner similar to a normal dragging operation on a GUI. Furthermore, for example, the execution control unit 75 may cause the display unit 55 to perform a display according to a dragging operation for each hand shape.

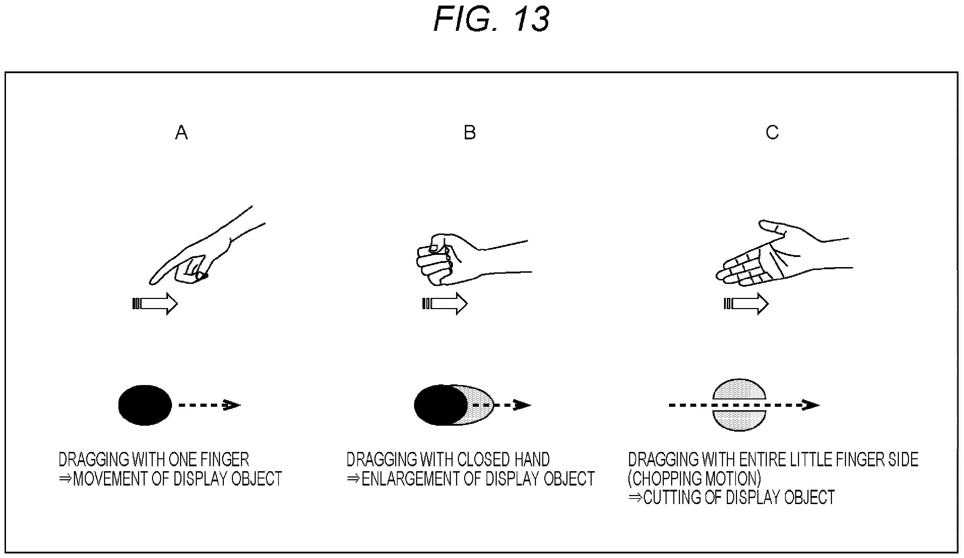

Fig. 13 is a diagram that illustrates an example of a display according to a dragging operation for each hand shape.

For example, as illustrated in A of Fig. 13, in a case where the user performs the dragging operation on the display object displayed on the top surface 21 in a state in which the user touches with his/her one finger the display object, the execution control unit 75 moves the display object.

Furthermore, as illustrated in B of Fig. 13, in a case where the user performs the dragging operation on the display object displayed on the top surface 21 in a state in which the user touches with his/her closed hand the display object in the state in which the little finger side faces down (closed hand with folded fingers), the execution control unit 75 expands the display object in the dragging direction.

Moreover, as illustrated as a modification in C of Fig. 13, in a case where the user performs the dragging operation on the display object displayed on the top surface 21 in a state in which the user closes his/her fingers with the little finger side facing down (chopping motion), the execution control unit 75 cuts the display object.

As described above, a different display may be performed for each hand shape in accordance with a dragging operation.

On the other hand, in a case where it is determined in step S76 that the dragging operation is not valid, that is, in a case where the movement distance of the touch point is less than the dragging threshold value, the execution control unit 75 executes no processing. The flow returns to step S71, and the processing tasks in and after step S71 are repeated.

According to the foregoing processing, the validity/invalidity of the dragging operation and the dragging threshold value representing the movement distance of the touch point at which the dragging operation starts to act are finely set on the basis of the hand shape. It is therefore possible to achieve a more natural and intuitive dragging operation.

In the foregoing processing, the shift to the dragging operation is made with the same hand shape as the touch operation. The shift to the dragging operation may alternatively be made with a change in hand shape different from the hand shape in the touch operation. For example, the shift from the touch operation with "one forefinger" to the dragging operation with "open hand with open fingers" may be made.

### <4. Example of turn operation>

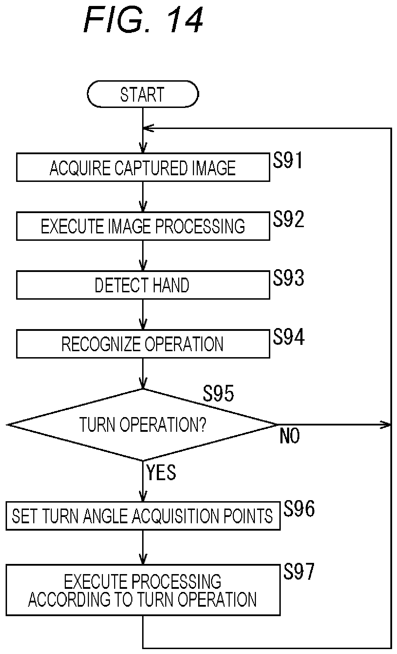

Fig. 14 is a flowchart that depicts a flow of turn operation control processing. The processing illustrated in Fig. 14 is executed in a state in which the image capturing unit 52 captures an image of the user's hand that operates a display object displayed on the top surface 21, for example.

Note that the processing tasks in steps S91 to S94 in the flowchart of Fig. 14 are similar to the processing tasks in steps S31 to S34 in the flowchart of Fig. 6; therefore, the description thereof will not be given here.

That is, in step S95, the operation recognition unit 74 determines whether or not the type of the recognized operation is a turn operation. Specifically, it is determined whether or not the hand shape indicated by the shape information is a hand shape in the turn operation.

In a case where it is determined in step S95 that the type of the operation is not the turn operation, the flow returns to step S91, and the processing tasks in and after step S91 are repeated.

On the other hand, in a case where it is determined in step S95 that the type of the operation is the turn operation, that is, in a case where the hand shape indicated by the shape information is the hand shape in the turn operation, the flow proceeds to step S96.

In step S96, the setting unit 81 sets predetermined two points on one or more fingers (specifically, a line segment between two points) as an acting region of the fingers in the turn operation, for turn angle acquisition points on the basis of the shape information from the operating body part detection unit 73.

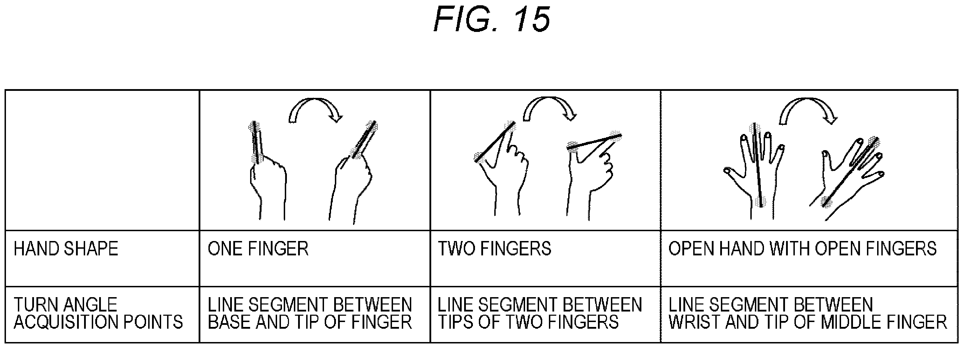

Here, with reference to Fig. 15, a description will be given of turn angle acquisition points associated with a hand shape indicated by shape information. As illustrated in Fig. 15, turn angle acquisition points are set in accordance with a hand shape indicated by shape information.

Specifically, in a case where the hand shape is "one finger" referring to a state in which, for example, only the forefinger is extended, the turn angle acquisition points are set at a line segment between the base and the tip of the extended finger (the forefinger). Note that the extended finger is not limited to the forefinger.

In a case where the hand shape is "two fingers" referring to a state in which, for example, two of the fingers, such as the thumb and the forefinger, are extended, the turn angle acquisition points are set at a line segment between the tips of the two fingers. Note that the extended two fingers are not limited to the thumb and the forefinger.

In a case where the hand shape is "open" referring to a state in which the fingers are open, the turn angle acquisition points are set at a line segment between the wrist and, for example, the tip of any one of the fingers such as the middle finger.

As described above, the turn angle acquisition points are set in accordance with the hand shape. The user is therefore able to appropriately use different hand shapes in a case of performing a fine operation and in a case of performing a rough operation, by changing the hand shape, for example.

Referring back to the flowchart of Fig. 14, in step S97, the execution control unit 75 executes processing according to the turn operation at the turn angle acquisition points. Specifically, the execution control unit 75 executes processing according to a turn angle of a turn of the set turn angle acquisition points (the line segment between the two points) about a normal direction of the top surface 21.

For example, the execution control unit 75 causes the display unit 55 to perform a display according to the turn operation. The execution control unit 75 turns, for example, a knob displayed as a display object on the top surface 21, in accordance with the turn angle of the turn angle acquisition points.

According to the foregoing processing, the turn angle acquisition points are set on the basis of the hand shape. It is therefore possible to achieve a more natural turn operation.

According to the foregoing processing, in the case where the hand shape indicated by the shape information is the hand shape in the turn operation, the turn angle acquisition points are set as the acting region of the hand in the turn operation. Besides this, a turn angle multiple that is a multiple of the turn angle of the turn angle acquisition points at the time when the turn of the turn angle acquisition points acts may be set as a parameter for the turn operation.

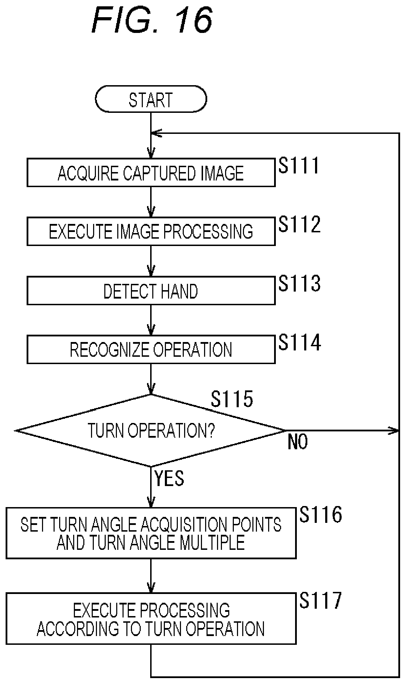

Fig. 16 is a flowchart that depicts a flow of turn operation control processing in which the turn angle multiple is set as the parameter for the turn operation.

Note that the processing tasks in steps S111 to S115 in the flowchart of Fig. 16 are similar to the processing tasks in steps S91 to S95 in the flowchart of Fig. 14; therefore, the description thereof will not be given here.

That is, in a case where it is determined in step S115 that the type of the operation is the turn operation, that is, in a case where the hand shape indicated by the shape information is the hand shape in the turn operation, the flow proceeds to step S116.

In step S116, the setting unit 81 sets turn angle acquisition points and a turn angle multiple as an acting region of and parameters for the hand in the turn operation, on the basis of the shape information from the operating body part detection unit 73.

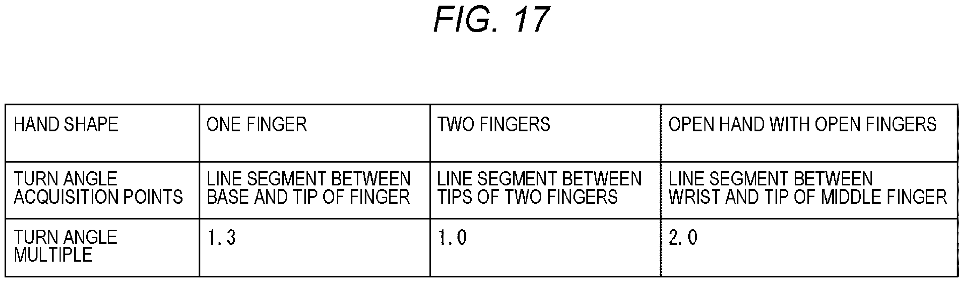

Here, with reference to Fig. 17, a description will be given of a turn angle multiple associated with a hand shape indicated by shape information. As illustrated in Fig. 17, a turn angle multiple is set in accordance with a hand shape indicated by shape information.

Specifically, in the case where the hand shape is "one finger" referring to the state in which only one finger is extended, the turn angle acquisition points are set at a line segment between the base and the tip of the extended finger, and the turn angle multiple is set at 1.3 times.

In the case where the hand shape is "two fingers" referring to the state in which two of the fingers are extended, the turn angle acquisition points are set at a line segment between the tips of the two fingers, and the turn angle multiple is set at 1.0 time.

In the case where the hand shape is "open hand with open fingers", the turn angle acquisition points are set at a line segment between the wrist and, for example, the tip of the middle finger, and the turn angle multiple is set at 2.0 times.

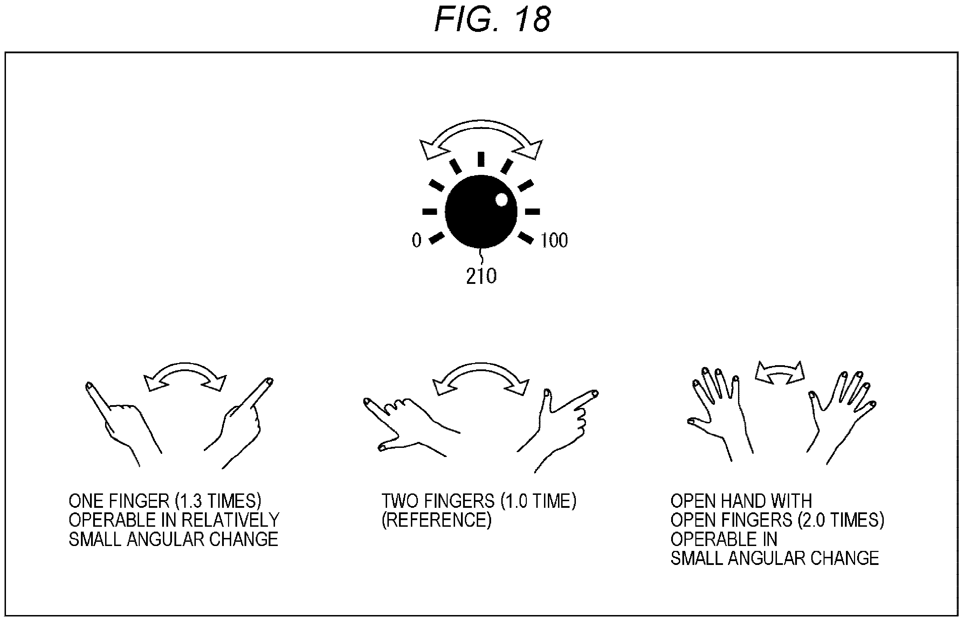

Fig. 18 is a diagram that depicts a turn angle multiple and a turnable region for each hand shape. Herein, a description will be given of an exemplary operation of a knob 210 as a display object illustrated on the upper side of the figure.

As illustrated at the middle of the lower side of Fig. 18, a turn angle multiple in operating the knob 210 in the case where the hand shape is "two fingers" is defined as a reference (1.0 time).

A turnable region of turn angle acquisition points in the case where the hand shape is "one finger" is relatively narrower than that in the case where the hand shape is "two fingers". As illustrated on the left of the lower side of the figure, therefore, a turn angle multiple in operating the knob 210 in the case where the hand shape is "one finger" is set at 1.3 times, so that the knob 210 can be operated at less load even in a relatively small angular change.

Furthermore, the turnable region of the turn angle acquisition points in the case where the hand shape is "open hand with open fingers" is considerably narrower than that in the case where the hand shape is "two fingers". As illustrated on the right of the lower side of the figure, therefore, the turn angle multiple in operating the knob 210 in the case where the hand shape is "open hand with open fingers" is set at 2.0 times, so that the knob 210 can be operated at less load even in a small angular change.

As described above, since the turn angle multiple is set in accordance with the hand shape, the user is able to perform the turn operation with high operability for each hand shape.

Referring back to the flowchart of Fig. 16, in step S117, the execution control unit 75 executes processing according to the turn operation at the turn angle acquisition points, on the basis of the turn angle multiple. Specifically, the execution control unit 75 executes processing according to a turn angle based on the turn angle multiple at the set turn angle acquisition points (the line segment between the two points).

According to the foregoing processing, the turn angle multiple is set on the basis of the hand shape. It is therefore possible to achieve a more natural turn operation at less load.

### <5. Others>

### (Overall flow of operation control processing)

The foregoing description concerns the flows of the processing as to the respective operations, that is, the touch operation, the dragging operation, and the turn operation. These operations may alternatively be recognized in one processing.

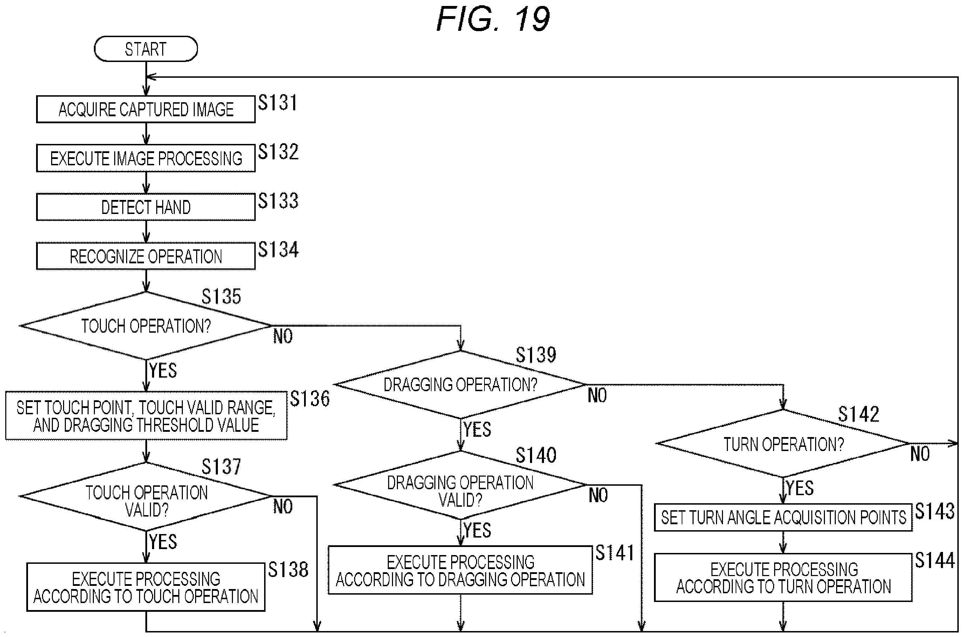

With reference to Fig. 19, hence, a description will be given of an overall flow of operation control processing.

The processing tasks in steps S131 to S138 in the flowchart of Fig. 19 are basically similar to the processing tasks in steps S31 to S38 in the flowchart of Fig. 6; therefore, the description thereof will not be given here.

However, in a case where it is determined in step S135 that the type of the recognized operation is not the touch operation, the flow proceeds to step S139.

Furthermore, in step S136, on the basis of the shape information from the operating body part detection unit 73, a touch point and a touch valid range are set as an acting region of and parameters for the hand in the touch operation, and a dragging threshold value is also set as a parameter for the dragging operation.

The processing tasks in steps S139 to S141 are similar to the processing tasks in steps S75 to S77 in the flowchart of Fig. 11; therefore, the description thereof will not be given here.

However, in a case where it is determined in step S139 that the type of the recognized operation is not the dragging operation, the flow proceeds to step S142.

The processing tasks in steps S142 to S144 are similar to the processing tasks in steps S95 to S97 in the flowchart of Fig. 14; therefore, the description thereof will not be given here.

As described above, it is possible to determine the respective operations, that is, the touch operation, the dragging operation, and the turn operation in one processing.

### (Modification of touch operation)

In a case where the hand shape indicated by the shape information is the hand shape in the touch operation, the touch point, the touch valid range, and the touch threshold value may be set in accordance with whether or not the palm of the hand (specifically, the wrist-side portion of the palm) or the elbow is in contact with the operation surface (the top surface 21). It is possible to determine whether or not the palm of the hand or the elbow is in contact with the top surface 21, by detecting the skeletons of the hand and arm to recognize the positions of the palm and elbow and calculating a distance between the palm or elbow and the top surface 21 on the basis of the distance image.

Furthermore, an operation to be accepted (an operation to be determined) may be changed in accordance with whether or not the palm of the hand or the elbow is in contact with the top surface 21.

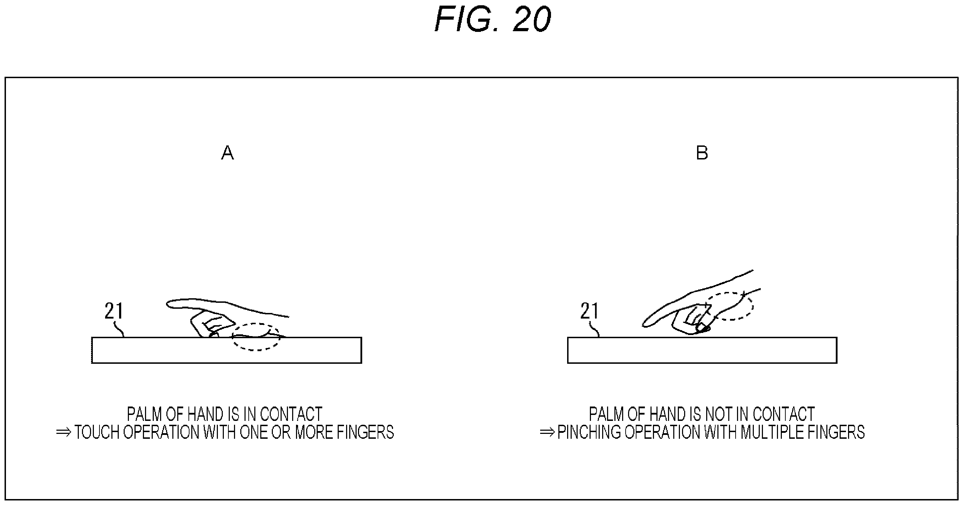

As illustrated in A of Fig. 20, for example, in a state in which the palm of the hand is in contact with the top surface 21, a touch operation with one or more fingers is accepted.

On the other hand, as illustrated in B of Fig. 20, in a state in which the palm of the hand is not in contact with the top surface 21, a pinching operation (enlargement, reduction, turn) with multiple fingers is accepted. Note that even when the pinching operation with multiple fingers is operated in the state in which the palm of the hand is in contact with the top surface 21 as illustrated in A of Fig. 20, the pinching operation is not accepted.

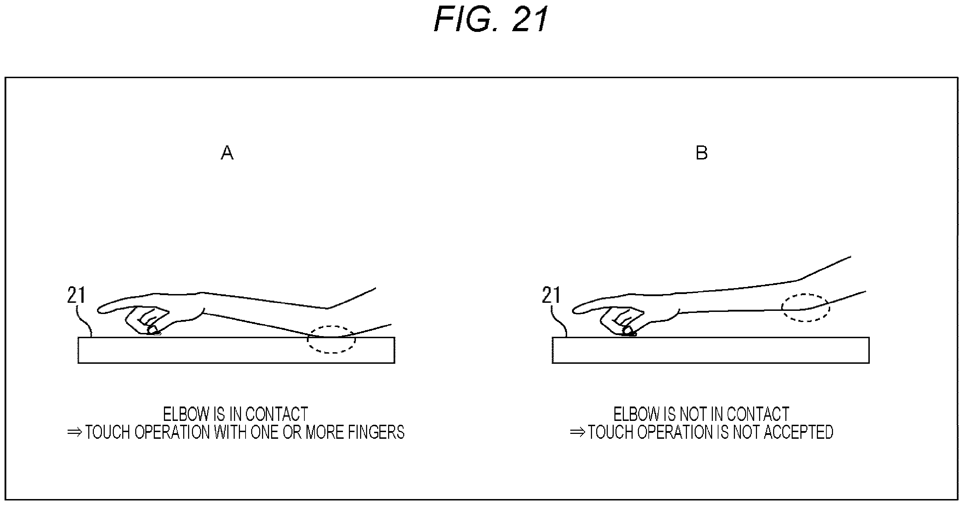

Furthermore, the touch operation with one or more fingers is accepted in a state in which the elbow is in contact with the top surface 21 as illustrated in A of Fig. 21.

On the other hand, in a state in which the elbow is not in contact with the top surface 21 as illustrated in B of Fig. 21, a touch operation with one or more fingers is not accepted, but a pointing operation of pointing a distant display object with one of the fingers is accepted. According the pointing operation, for example, a linear arrow is drawn from the fingertip toward the distant display object.

Furthermore, the touch point, the touch valid range, and the touch threshold value may be set in accordance with whether or not a tremor in hand owing to convulsions or the like is sensed. The tremor in hand may be detected before the start of the touch operation control processing, or may be sensed during the processing.

For example, in a case where the tremor in hand is sensed, a time from a determination that the operation is a touch operation to a determination that the touch operation is valid is set longer than usual. With this configuration, even in a case where a user having a tremor in hand spends time for the touch operation more than necessary, it is possible to accept the touch operation.

Moreover, the hand shape to be determined as the touch operation, the touch point, the touch valid range, and the touch threshold value may be set in accordance with countries and ethnic cultures and customs.

### (Modifications of all operations)

The criterion for the hand shape may be changed in accordance with whether or not a difference in hand from usual is sensed.

For example, in a case where the user puts on his/her gloves or has a hand bandaged, the criterion is loosened as to the degree of opening of the fingers. Furthermore, in a case where one or more fingers are defective, a gesture may be recognized with the defective finger(s) ignored. Specifically, it is recognized that all the fingers are open in a state in which the fingers excluding one or more defective fingers are open.

Moreover, the operation criteria may be loosened since an operation is less likely to be determined in a case where the user's fingernails are long or the user's hand is dirt.

Furthermore, in a case where an unregistered hand shape is repeatedly detected, the user is made to confirm that this hand shape is intentional, and then an operation associated with the hand shape may be newly registered.

Moreover, in a case where the user's hand approaches a display object to be subjected to a specific operation or enters a predetermined range set with respect to the display object, a hand shape recognized at this time may be registered as a hand shape in the specific operation. In this case, the operation with the registered hand shape may be made valid only within the certain range, or the operation with the registered hand shape may be made valid even out of the range.

Moreover, the acting region and the parameters may be set on the basis of any information in addition to the hand shape and the hand posture. For example, the acting region and the parameters are set on the basis of whether the user is sitting (a sitting position) or standing (a standing position), an extended or bent state of the user's arm, a distance to an operation target, a size of an operation target, and the like.

### (Other application examples)

In the foregoing embodiment, the top surface 21 of the table 20 serves as the operation surface, and the acting region and the parameters are set on the basis of the hand shape and the hand posture relative to the operation surface. The operation surface may alternatively be a flat plane such as a wall or a ceiling.

Furthermore, the operating body part is not limited to a hand, but may be an arm, an upper half, a leg, or the whole body as long as the operating body part is a site of a user's body from which a touch and a gesture are recognizable.

Moreover, the user is not limited to a human, but may be an animal such as a monkey, an orangutan, a dog, or a cat.

### (Configuration example of computer)

The foregoing series of processing tasks can be executed by hardware, and can also be executed by software. In a case where the series of processing tasks is executed by software, a program constituting the software is installed in a computer. Here, examples of the computer include a computer incorporated in dedicated hardware, a general-purpose personal computer, for example, capable of executing various functions by installing various programs, and the like.

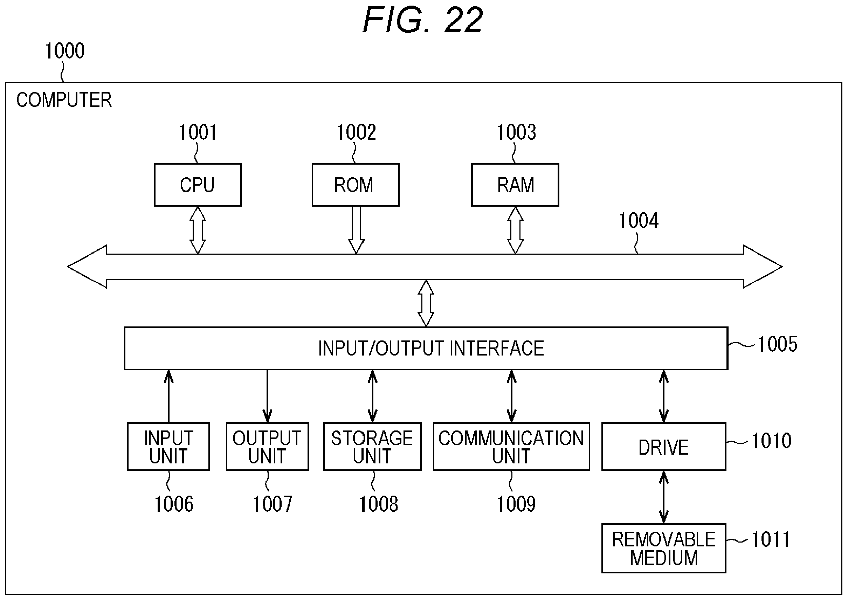

Fig. 22 is a block diagram that illustrates a configuration example of hardware in a computer that installs therein the program to execute the foregoing series of processing tasks.

In the computer, a CPU 1001, a ROM 1002, and a RAM 1003 are interconnected via a bus 1004.

Moreover, an input/output interface 1005 is connected to the bus 1004. An input unit 1006, an output unit 1007, a storage unit 1008, a communication unit 1009, and a drive 1010 are connected to the input/output interface 1005.

The input unit 1006 includes a keyboard, a mouse, a microphone, and the like. The output unit 1007 includes a display, a speaker, and the like. The storage unit 1008 includes a hard disk, a nonvolatile memory, and the like. The communication unit 1009 includes a network interface and the like. The drive 1010 drives a removable medium 1011 such as a magnetic disk, an optical disk, a magneto-optical disk, or a semiconductor memory.

In the computer configured as described above, the CPU 1001 loads, for example, a program stored in the storage unit 1008, onto the RAM 1003 via the input/output interface 1005 and the bus 1004 to execute the program, thereby carrying out the foregoing series of processing tasks.

The program to be executed by the computer (the CPU 1001) can be provided while being recorded in, for example, the removable medium 1011 as a package medium or the like. Furthermore, the program can be provided via a wired or wireless transmission medium such as a local area network, the Internet, or digital satellite broadcasting.

In the computer, the program can be installed in the storage unit 1008 via the input/output interface 1005 in such a manner that the removable medium 1011 is mounted to the drive 1010. Furthermore, the program can be received at the communication unit 1009 via a wired or wireless transmission medium, and can be installed in the storage unit 1008. In addition, the program can be previously installed in the ROM 1002 or the storage unit 1008.

Note that the program to be executed by the computer may be a program by which processing tasks are carried out in a time-series manner in accordance with the sequence described in the present specification, or may be a program by which processing tasks are carried out in parallel or are carried out at a required timing such as a time when the program is called up.

The term "system" in the present specification refers to an aggregate of a plurality of constituent elements (apparatuses, modules (components), and the like), and it does not matter whether or not all the constituent elements are in the same housing. Therefore, the term "system" involves both of a plurality of apparatuses accommodated in separate housings and connected to one another via a network and a single apparatus in which a plurality of modules is accommodated in a single housing.

Note that the effects described in the present specification are merely exemplary and not limitative, and there may be achieved other effects.

Embodiments of the present disclosure are not limited to the foregoing embodiments, and various variations can be made within a range not departing from the gist of the present disclosure.

For example, the present disclosure can take a configuration of cloud computing in which a plurality of apparatuses processes one function via a network in collaboration with one another on a task-sharing basis.

Furthermore, the respective steps described with reference to the foregoing flowcharts can be executed by a single apparatus or can be executed by a plurality of apparatuses with the steps divided among the plurality of apparatuses.

Moreover, in a case where a single step includes a plurality of processing tasks, the plurality of processing tasks included in the single step can be executed by a single apparatus or can be executed by a plurality of apparatuses with the plurality of processing tasks divided among the plurality of apparatuses.

### (Other configurations to be adopted by the present disclosure)

Moreover, the present disclosure can adopt the following configurations.
(1) An information processing apparatus including:
   a control unit configured to, on the basis of shape information of an operating body part that performs an operation on an operation surface, the shape information being acquired from a captured image, fix an acting region on which the operation by the operating body part acts and set a parameter to be used for a determination as to the operation in the acting region.
(2) The information processing apparatus as recited in (1), further including:
   an operation recognition unit configured to recognize a type of the operation, on the basis of the shape information,
   in which
   the control unit fixes the acting region and sets the parameter, as to the recognized type of the operation.
(3) The information processing apparatus as recited in (2), in which
   the operating body part includes a site of a user's body.
(4) The information processing apparatus as recited in (3), in which
   the operating body part includes a user's hand,
   the operation recognition unit recognizes the type of the operation, on the basis of a shape of the hand indicated by the shape information, and
   the control unit fixes a part of the hand as the acting region.
(5) The information processing apparatus as recited in (4), in which
   the operation includes a touch operation.
(6) The information processing apparatus as recited in (5), in which
   the control unit fixes, as the acting region, at least one of a tip of any one of multiple fingers, a center of gravity of the entire fingers, or a center of gravity of the entire hand.
(7) The information processing apparatus as recited in (6), in which
   the control unit sets, as the parameter, a valid range where the operation in the acting region acts on the operation surface.
(8) The information processing apparatus as recited in (7), in which
   the valid range includes an area range on the operation surface.
(9) The information processing apparatus as recited in (8), in which
   the control unit further sets, as the parameter, a threshold value of a distance between the acting region and the operation surface at a time when the operation in the acting region acts on the operation surface.
(10) The information processing apparatus as recited in (4), in which
   the operation includes a dragging operation.
(11) The information processing apparatus as recited in (10), in which
   the control unit fixes, as the acting region, at least one of a tip of any one of multiple fingers, a center of gravity of the entire fingers, or a center of gravity of the entire hand.
(12) The information processing apparatus as recited in (11), in which
   the control unit sets, as the parameter, a movement distance of the acting region at a time when the operation in the acting region starts to act on the operation surface.
(13) The information processing apparatus as recited in (4), in which
   the operation includes a turn operation.
(14) The information processing apparatus as recited in (13), in which
   the control unit fixes, as the acting region, at least one of a line segment between tips of two fingers, a line segment between a tip of any one of fingers and a wrist, or a line segment between a tip and a base of any one of fingers.
(15) The information processing apparatus as recited in (14), in which
   the control unit sets, as the parameter, a multiple of a turn angle of the acting region at a time when a turn of the acting region about a normal direction of the operation surface acts on the operation surface.
(16) The information processing apparatus as recited in any of (1) to (15), in which
   the control unit fixes the acting region and sets the parameter on the basis of the shape information and posture information of the operating body part, the posture information being acquired from the captured image.
(17) The information processing apparatus as recited in any of (1) to (16), further including:
   an execution control unit configured to control execution of processing according to the operation in the acting region, on the basis of the parameter.
(18) The information processing apparatus as recited in (17), in which
   the execution control unit controls a display according to the operation in the acting region, on the basis of the parameter.
(19) An information processing method including:
   causing an information processing apparatus to, on the basis of shape information of an operating body part that performs an operation on an operation surface, the shape information being acquired from a captured image, fix an acting region on which the operation by the operating body part acts and set a parameter to be used for a determination as to the operation in the acting region.
(20) A recording medium recording therein a program that causes a computer to execute processing of,
   on the basis of shape information of an operating body part that performs an operation on an operation surface, the shape information being acquired from a captured image, fixing an acting region on which the operation by the operating body part acts and setting a parameter to be used for a determination as to the operation in the acting region.

### REFERENCE SIGNS LIST

- 10: Information processing apparatus
- 20: Table
- 21: Top surface
- 51: Control unit
- 52: Image capturing unit
- 53: Input unit
- 54: Storage unit
- 55: Display unit
- 56: Output unit
- 71: Image capturing control unit
- 72: Image processing unit
- 73: Operating body part detection unit
- 74: Operation recognition unit
- 75: Execution control unit
- 81: Setting unit

## Claims

1. An information processing apparatus comprising:
a control unit configured to, on a basis of shape information of an operating body part that performs an operation on an operation surface, the shape information being acquired from a captured image, fix an acting region on which the operation by the operating body part acts and set a parameter to be used for a determination as to the operation in the acting region.

2. The information processing apparatus according to claim 1, further comprising:
an operation recognition unit configured to recognize a type of the operation, on the basis of the shape information,
wherein
the control unit fixes the acting region and sets the parameter, as to the recognized type of the operation.

3. The information processing apparatus according to claim 2, wherein
the operating body part comprises a site of a user's body.

4. The information processing apparatus according to claim 3, wherein
the operating body part comprises a user's hand,
the operation recognition unit recognizes the type of the operation, on a basis of a shape of the hand indicated by the shape information, and
the control unit fixes at least a part of the hand as the acting region.

5. The information processing apparatus according to claim 4, wherein
the operation includes a touch operation.

6. The information processing apparatus according to claim 5, wherein
the control unit fixes, as the acting region, at least one of a tip of any one of multiple fingers, a center of gravity of the entire fingers, or a center of gravity of the entire hand.

7. The information processing apparatus according to claim 6, wherein
the control unit sets, as the parameter, a valid range where the operation in the acting region acts on the operation surface.

8. The information processing apparatus according to claim 7, wherein
the valid range includes an area range on the operation surface.

9. The information processing apparatus according to claim 8, wherein
the control unit further sets, as the parameter, a threshold value of a distance between the acting region and the operation surface at a time when the operation in the acting region acts on the operation surface.

10. The information processing apparatus according to claim 4, wherein
the operation includes a dragging operation.

11. The information processing apparatus according to claim 10, wherein
the control unit fixes, as the acting region, at least one of a tip of any one of multiple fingers, a center of gravity of the entire fingers, or a center of gravity of the entire hand.

12. The information processing apparatus according to claim 11, wherein
the control unit sets, as the parameter, a movement distance of the acting region at a time when the operation in the acting region starts to act on the operation surface.

13. The information processing apparatus according to claim 4, wherein
the operation includes a turn operation.

14. The information processing apparatus according to claim 13, wherein
the control unit fixes, as the acting region, at least one of a line segment between tips of two fingers, a line segment between a tip of any one of fingers and a wrist, or a line segment between a tip and a base of any one of fingers.

15. The information processing apparatus according to claim 14, wherein
the control unit sets, as the parameter, a multiple of a turn angle of the acting region at a time when a turn of the acting region about a normal direction of the operation surface acts on the operation surface.

16. The information processing apparatus according to claim 1, wherein
the control unit fixes the acting region and sets the parameter on a basis of the shape information and posture information of the operating body part, the posture information being acquired from the captured image.

17. The information processing apparatus according to claim 1, further comprising:
an execution control unit configured to control execution of processing according to the operation in the acting region, on a basis of the parameter.

18. The information processing apparatus according to claim 17, wherein
the execution control unit controls a display according to the operation in the acting region, on the basis of the parameter.

19. An information processing method comprising:
causing an information processing apparatus to, on a basis of shape information of an operating body part that performs an operation on an operation surface, the shape information being acquired from a captured image, fix an acting region on which the operation by the operating body part acts and set a parameter to be used for a determination as to the operation in the acting region.

20. A recording medium recording therein a program that causes a computer to execute processing of,
on a basis of shape information of an operating body part that performs an operation on an operation surface, the shape information being acquired from a captured image, fixing an acting region on which the operation by the operating body part acts and setting a parameter to be used for a determination as to the operation in the acting region.
